# EUROPÄISCHE PATENTSCHRIFT

(11) **EP 0 989 027 B1**
(45) Veröffentlichungstag und Bekanntmachung des Hinweises auf die Patenterteilung: **19.10.2005**
(21) Anmeldenummer: 99115637.3
(22) Anmeldetag: 07.08.1999
(51) Int. Cl.: B60R 1/06, B60R 1/07

(54) **Verstellvorrichtung für einen Aussenrückblickspiegel für Kraftfahrzeuge**
Adjusting device for a vehicle rear view mirror
Dispositif de règlage pour un rétroviseur extérieur de véhicule

(30) Priorität: 26.09.1998 DE 19844269
(43) Veröffentlichungstag der Anmeldung: 29.03.2000
(73) Patentinhaber: Reitter & Schefenacker GmbH & Co. KG, 73730 Esslingen (DE)
(72) Erfinder: Mertens, Jens, 70374 Stuttgart (DE)
(74) Vertreter: Kohl, Karl-Heinz

(56) Entgegenhaltungen:
- EP-A- 0 331 744
- EP-A- 0 388 988
- EP-A- 0 845 390
- WO-A-90/10555
- US-A- 4 715 698
- US-A- 4 991 950
- PATENT ABSTRACTS OF JAPAN vol. 1996, no. 10, 31. Oktober 1996 (1996-10-31) & JP 08 156688 A (NISSAN DIESEL MOTOR CO LTD), 18. Juni 1996 (1996-06-18)

## Beschreibung

Die Erfindung betrifft eine Verstellvorrichtung für einen Außenrückblickspiegel für Kraftfahrzeuge nach dem Oberbegriff des Anspruches 1.

Es sind Außenrückblickspiegel bekannt, bei denen der Spiegelglasträger über einen Verstellantrieb verstellt werden kann. Das Spiegelglas ist durch ein Heizelement beheizbar. Der Verstellantrieb und das Heizelement sind über Leitungen mit jeweils einem Steckerteil elektrisch verbunden. Jedes Steckerteil muß über weitere Leitungen bzw. Kabel an die Batterie des Kraftfahrzeuges angeschlossen werden. Durch die verschiedenen Zuleitungen und Steckerteile ist die Montage des Außenrückblickspiegels aufwendig und schwierig. Außerdem stören die lose im Spiegelgehäuse vorhandenen Kabel. Sie sind zudem den Umgebungsbedingungen ausgesetzt, so daß sie relativ leicht beschädigt werden können. An die Steckerteile können die falschen Zuleitungen angeschlossen werden.

Bei der gattungsgemäßen Verstellvorrichtung (EP-A-0 845 390) wird das Antriebsgehäuse in eine Öffnung des Spiegelglasträgers eingerastet. Hierbei gelangen Kontaktstifte des Antriebsgehäuses in Buchsen, die im Spiegelglasträger vorgesehen und über elektrische Leitungen mit dem Steckerteil verbunden sind. Das Antriebsgehäuse hat weitere Buchsen, in die Kontaktstifte des Heizelementes eingreifen.

Es ist auch eine Verstellvorrichtung für Außenspiegel bekannt (US-A-4 991 950), bei der der Spiegelglasträger kugelgelenkig gelagert ist. Die elektrischen Zuleitungen für den Verstellantrieb und für das Heizelement des Spiegelglases sind an einen gemeinsamen Steckerteil angeschlossen. Die Zuleitungen liegen lose im Spiegelgehäuse.

Der Erfindung liegt die Aufgabe zugrunde, die gattungsgemäße Verstellvorrichtung so auszubilden, daß eine einfache und kostengünstige Montage des Spiegelglases möglich ist.

Diese Aufgabe wird bei der gattungsgemäßen Verstellvorrichtung erfindungsgemäß mit den kennzeichnenden Merkmalen des Anspruches 1 gelöst.

Bei der erfindungsgemäßen Verstellvorrichtung ist für den Verstellantrieb und das Heizelement nur der einzige Steckerteil vorgesehen, an den das Stromzuführungskabel angeschlossen wird. Dadurch entfallen mehrere in der Verstellvorrichtung unterzubringende Leitungen und Stecker. Die Montage des Spiegels wird dadurch erheblich vereinfacht. Außerdem kann der Spiegel dadurch kostengünstig hergestellt werden. Es wird die Gefahr vermieden, daß die Leitungen im Spiegelgehäuse den Umgebungsbedingungen ausgesetzt sind und dadurch beschädigt werden können. Falsche Verbindungen werden zuverlässig vermieden. Außerdem ist eine zusätzliche Integration in Bussysteme möglich. Die elektrischen Zuleitungen werden durch das Kugelgelenk bis zur Steckverbindung geführt. Dadurch kann der Spiegelglasträger problemlos gegenüber dem Antriebsgehäuse verschwenkt werden. Die elektrischen Leitungen stören die Schwenkbarkeit nicht.

Der Spiegelglasträger 2 hat eine Trägerplatte 4, auf der unter Zwischenlage wenigstens eines Heizelementes 6, vorzugsweise einer Heizfolie, das Spiegelglas 3 befestigt ist.

Der Spiegelglasträger 2 ist auf einem vorzugsweise plattenförmigen Verstellteller 7 befestigt, der über ein Kugelgelenk 8 schwenkbar mit einem Antriebsgehäuse 9 verbunden ist. Es hat ein wannenförmiges Gehäuseunterteil 10 und einen Gehäusedeckel 11. Er ist auf seiner Außenseite mit einer Gelenkpfanne 5 versehen, in die ein am Verstellteller 7 vorgesehener Gelenkkopf 5' eingreift. Die Gelenkpfanne 5 und der Gelenkkopf 5', die das Kugelgelenk 8 bilden, sind vorteilhaft einstückig mit dem Gehäusedeckel 11 bzw. dem Verstellteller 7 ausgebildet.

Über eine Seitenwand 12 des Gehäuseunterteiles 10 ragt ein Stekkerteil 13, der mit Anschlußenden 14 und 15 von Leitungen 16, 17 versehen ist. Sie verlaufen durch das Gehäuseunterteil 10 und ragen durch einen vorzugsweise zylindrischen Ansatz 20, der mittig in der Gelenkpfanne 5 vorgesehen ist und über diese vorsteht. Der Ansatz 20 ist vorteilhaft einstückig mit dem Gehäusedeckel 11 ausgebildet. Durch den Ansatz 20 erstrecken sich die Leitungen 16, 17 in den Gelenkkopf 5', aus dem sie seitlich herausgeführt sind.

Der Verstellteller 7 hat eine als Vertiefung ausgebildete Aufnahme 25, in der ein im wesentlichen U-förmiges Kontaktstück 24 einer Leiterplatte 33 untergebracht ist, an die die Leitungen 16, 17 angeschlossen sind. Die zueinander parallelen Schenkel 21, 22 des Kontaktstückes 24 haben nahe ihren freien Enden jeweils eine Einschnürung 26, die durch eine V-förmige Profilierung der Schenkel 21, 22 gebildet wird. Bei montiertem Spiegel ragt in das Kontaktstück ein Steckerteil 27, das mit einer Leiterplatte 28 verbunden ist. Sie liegt zwischen dem Heizelement 6 und der Trägerplatte 4. Mit der Leiterplatte 28 sind das Heizelement 6 und das EC-Spiegelglas elektrisch verbunden. Die Leiterplatte 28 ist hierfür mit entsprechenden Leiterbahnen versehen.

Hinter dem Spiegelglas 3 kann eine Blinkleuchte vorgesehen sein, die vorteilhaft mit der Leiterplatte 28 elektrisch verbunden ist. Es ist auch möglich, für das Heizelement 6, das EC-Glas 3 und für die Blinkleuchte gesonderte Leitungen bzw. Leiterbahnen vorzusehen, die zum Steckerteil 27 geführt sind. Beim Einstecken in das Kontaktstück 24 werden dessen Schenkel 21, 22 aufgrund der Einschnürungen 26 elastisch aufgespreizt, so daß sie unter hohem Kontaktdruck am Steckerteil 27 anliegen.

Anstelle der Leiterplatte 28 können selbstverständlich auch Leitungen vorgesehen sein.

Die Stromzuführung erfolgt über den Steckerteil 13, an den ein entsprechendes Stromkabel angeschlossen wird. Es wird durch den (nicht dargestellten) Spiegelfuß in das Kraftfahrzeug geführt und mit dessen Batterie verbunden. Da für die Stromversorgung der verschiedenen Baugruppen des Außenspiegels nur ein einziges Steckerteil 13 vorgesehen ist, läßt sich der Außenspiegel einfach und kostengünstig montieren. Es entfällt eine Vielzahl von Leitungen, so daß die Montage des Außenspiegels, insbesondere des Spiegelglases 3, erleichtert wird.

Über den Steckerteil 13 werden auch die an sich bekannten Antriebsmotoren 31, 32 zum Verstellen des Spiegelglasträgers 2 mit Strom versorgt, die im Antriebsgehäuse 9 untergebracht sind.

Da nur ein Steckerteil 13 vorgesehen ist, können auch keine Fehler beim Zusammenstecken auftreten, so daß falsche Kontaktierungen zuverlässig vermieden werden.

Der Verstellteller 7 weist eine Ringnut 29 auf, die vorzugsweise koaxial zur Aufnahme 25 liegt. In der Ringnut 29 liegt eine Ringdichtung 30, mit der die Aufnahme 25 und das Steckerteil 27 abgedichtet werden. Die Ringdichtung 30 liegt an einem verdickten Abschnitt des Spiegelglasträgers 2 dichtend an.

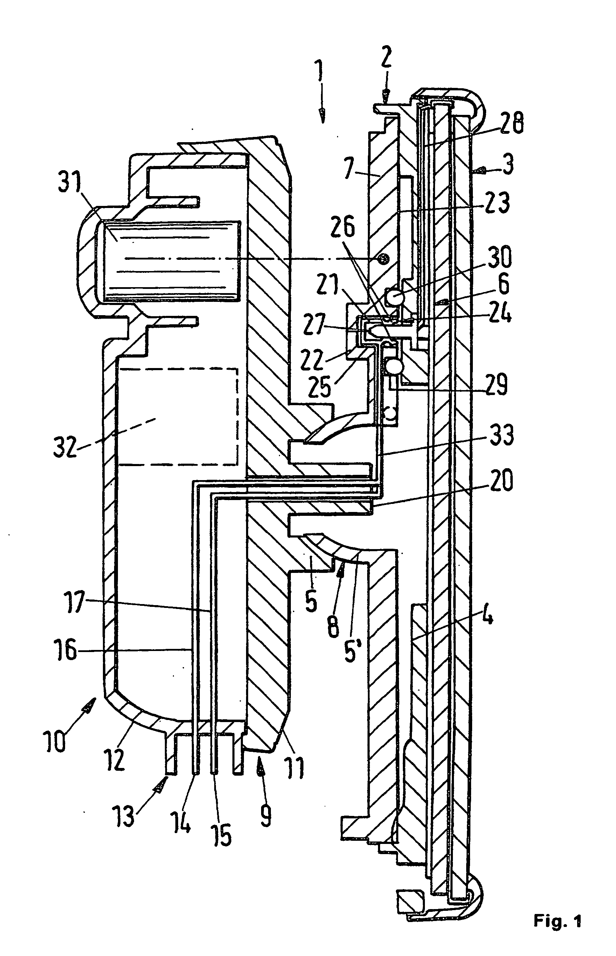

## Patentansprüche

1. Verstellvorrichtung für einen Außenrückblickspiegel für Kraftfahrzeuge, mit einem Antriebsgehäuse (9), an dem ein Spiegelglas (3) angebracht ist, das auf einem Spiegelglasträger (2) befestigt ist, der über mindestens einen elektrischen Antrieb (31, 32) verstellbar ist, und wenigstens einem Heizelement (6) zum Beheizen des Spiegelglases (3), wobei zur Stromversorgung des Verstellantriebes (31, 32) und des Heizelementes (6) elektrische Leitungen (16, 17) im Antriebsgehäuse (9) vorgesehen sind, die zu einem gemeinsamen Steckerteil (13) zum Anschluß eines Stromzuführkabels führen und über wenigstens eine Steckverbindung (24, 27) mit einer elektrischen Zuleitung des Spiegelglasträgers (2) verbunden sind,
**dadurch gekennzeichnet, daß** die elektrischen Leitungen (16, 17) durch einen Ansatz (20) des Antriebsgehäuses (9) bis zur Steckverbindung (24, 27) verlaufen, und daß der Ansatz (20) mittig durch eine Gelenkpfanne (5) eines Kugelgelenkes (8) ragt, durch welches der Spiegelglasträger (2) mit dem Antriebsgehäuse (9) gelenkig verbunden ist.

2. Verstellvorrichtung nach Anspruch 1,
**dadurch gekennzeichnet, daß** der Ansatz (20) von einem Deckel (11) des Antriebsgehäuses (9) absteht.

3. Verstellvorrichtung nach Anspruch 1 oder 2,
**dadurch gekennzeichnet, daß** die Steckverbindung (24, 27) einen Stecker (27) aufweist, der am Spiegelglasträger (2) vorgesehen ist.

4. Verstellvorrichtung nach einem der Ansprüche 1 bis 3,
**dadurch gekennzeichnet, daß** die Steckverbindung (24, 27) wenigstens ein Kontaktstück (24) aufweist, das an einem Verstellteller (7)

5. Verstellvorrichtung nach Anspruch 3 oder 4,
**dadurch gekennzeichnet, daß** der Stecker (27) mit dem Heizelement (6) verbunden und an wenigstens einer Leiterplatte (28) vorgesehen ist.

6. Verstellvorrichtung nach Anspruch 5,
**dadurch gekennzeichnet, daß** die Leiterplatte (28) zwischen dem Heizelement (6) und dem Spiegelglasträger (2) liegt.

7. Verstellvorrichtung nach einem der Ansprüche 4 bis 6,
**dadurch gekennzeichnet, daß** das Kontaktstück (24) in einer Vertiefung (25) des Verstelltellers (7) liegt.

8. Verstellvorrichtung nach einem der Ansprüche 4 bis 7,
**dadurch gekennzeichnet, daß** der Verstellteller (7) mit dem Spiegelglasträger (2) verbunden ist,

9. Verstellvorrichtung nach einem der Ansprüche 4 bis 8,
**dadurch gekennzeichnet, daß** das Kontaktstück (24) und der Stecker (27) abgedichtet sind.

10. Verstellvorrichtung nach Anspruch 9,
**dadurch gekennzeichnet, daß** das Kontaktstück (24) und der Stecker (27) von einer Dichtung (30), vorzugsweise einer Ringdichtung, umgeben sind.

11. Verstellvorrichtung nach Anspruch 10,
**dadurch gekennzeichnet, daß** die Dichtung (30) in einer Vertiefung (29), vorzugsweise einer Ringnut, des Verstelltellers (7) liegt.

12. Verstellvorrichtung nach einem der Ansprüche 1 bis 11,
**dadurch gekennzeichnet, daß** an das Steckerteil (13) das als EC-Glas ausgebildete Spiegelglas (3) angeschlossen ist.

## Claims

1. Adjusting device for an exterior rear view mirror for motor vehicles, having a drive housing (9) to which is attached a mirror glass (3) which is fastened on a mirror-glass carrier (2), which can be adjusted via at least one electric drive (31, 32), and at least one heating element (6) for heating the mirror glass (3), electric lines (16, 17) being provided in the drive housing (9) to supply current to the adjusting drive (31, 32) and the heating element (6), the said electric lines leading to a common plug part (13) for the connection of a current supply cable and being connected via at least one plug-in connection (24, 27) to an electric supply line of the mirror-glass carrier (2), **characterized in that** the electric lines (16, 17) run through an extension (20) of the drive housing (9) as far as the plug-in connection (24, 27), and **in that** the extension (20) protrudes centrally through a socket (5) of a ball-and-socket joint (8) by means of which the mirror-glass carrier (2) is connected to the drive housing (9) in an articulated manner.

2. Adjusting device according to Claim 1, **characterized in that** the extension (20) protrudes from a cover (11) of the drive housing (9).

3. Adjusting device according to Claim 1 or 2, **characterized in that** the plug-in connection (24, 27) has a plug (27) which is provided on the mirror-glass carrier (2).

4. Adjusting device according to one of Claims 1 to 3, **characterized in that** the plug-in connection (24, 27) has at least one contact element (24) which is provided on an adjusting plate (7).

5. Adjusting device according to Claim 3 or 4, **characterized in that** the plug (27) is connected to the heating element (6) and is provided on at least one printed circuit board (28).

6. Adjusting device according to Claim 5, **characterized in that** the printed circuit board (28) is situated between the heating element (6) and the mirror-glass carrier (2).

7. Adjusting device according to one of Claims 4 to 6, **characterized in that** the contact element (24) is situated in a depression (25) of the adjusting plate (7).

8. Adjusting device according to one of Claims 4 to 7, **characterized in that** the adjusting plate (7) is connected to the mirror-glass carrier (2).

9. Adjusting device according to one of Claims 4 to 8, **characterized in that** the contact element (24) and the plug (27) are sealed.

10. Adjusting device according to Claim 9, **characterized in that** the contact element (24) and the plug (27) are surrounded by a seal (30), preferably an annular seal.

11. Adjusting device according to Claim 10, **characterized in that** the seal (30) is situated in a depression (29), preferably an annular groove, of the adjusting plate (7).

12. Adjusting device according to one of Claims 1 to 11, **characterized in that** the mirror glass (3), which is designed as EC glass, is connected to the plug part (13).

## Revendications

1. Dispositif de réglage pour un rétroviseur extérieur destiné à des véhicules automobiles, comprenant un carter d'entraînement (9) sur lequel est rapportée une glace de rétroviseur (3) qui est fixée sur un support de glace de rétroviseur (2) pouvant être réglé par l'intermédiaire d'au moins un entraînement électrique (31, 32), et comprenant également un élément chauffant (6) pour chauffer la glace de rétroviseur (3), des conducteurs électriques (16, 17) pour l'alimentation en courant de l'entraînement de réglage (31, 32) et de l'élément chauffant (6) étant prévus dans le carter d'entraînement (9), et conduisant à une pièce de connecteur (13) commune pour le raccordement d'un câble d'alimentation en courant, et étant reliés à un conducteur d'alimentation électrique du support de glace de rétroviseur (2) par l'intermédiaire d'au moins une connexion par enfichage (24, 27),
**caractérisé en ce que** les conducteurs électriques (16, 17) s'étendent à travers un appendice (20) du carter d'entraînement (9) jusqu'à la connexion par enfichage (24, 27), et **en ce que** l'appendice (20) s'engage de manière centrale à travers une calotte d'articulation (5) d'une articulation à rotule (8) par laquelle le support de glace de rétroviseur (2) est relié de manière articulée au carter d'entraînement (9).

2. Dispositif de réglage selon la revendication 1,
**caractérisé en ce que** l'appendice (20) fait saillie d'un couvercle (11) du carter d'entraînement (9).

3. Dispositif de réglage selon la revendication 1 ou 2,
**caractérisé en ce que** la connexion par enfichage (24, 27) comporte une fiche (27) qui est prévue sur le support de glace de rétroviseur (2).

4. Dispositif de réglage selon l'une des revendications 1 à 3,
**caractérisé en ce que** la connexion par enfichage (24, 27) comprend au moins une pièce de contact (24) qui est prévue sur un disque de réglage (7).

5. Dispositif de réglage selon la revendication 3 ou 4,
**caractérisé en ce que** la fiche (27) est reliée à l'élément chauffant (6) et est prévue sur au moins une plaque de circuit imprimé (28).

6. Dispositif de réglage selon la revendication 5,
**caractérisé en ce que** la plaque de circuit imprimé (28) se situe entre l'élément chauffant (6) et le support de glace de rétroviseur (2).

7. Dispositif de réglage selon l'une des revendications 4 à 6,
**caractérisé en ce que** la pièce de contact (24) se situe dans un creux (25) du disque de réglage (7).

8. Dispositif de réglage selon l'une des revendications 4 à 7,
**caractérisé en ce que** le disque de réglage (7) est relié au support de glace de rétroviseur (2).

9. Dispositif de réglage selon l'une des revendications 4 à 8,
**caractérisé en ce que** la pièce de contact (24) et la fiche (27) sont rendues étanches.

10. Dispositif de réglage selon la revendication 9,
**caractérisé en ce que** la pièce de contact (24) et la fiche (27) sont entourées par un joint d'étanchéité (30), de préférence un joint d'étanchéité annulaire.

11. Dispositif de réglage selon la revendication 10,
**caractérisé en ce que** le joint d'étanchéité (30) se situe dans un creux (29), de préférence une rainure annulaire, du disque de réglage (7).

12. Dispositif de réglage selon l'une des revendications 1 à 11,
**caractérisé en ce qu'**à la pièce de connecteur (13) est raccordée la glace de rétroviseur (3) réalisée en tant que glace ou verre EC.
